# EUROPÄISCHE PATENTANMELDUNG

(11) **EP 0 972 494 A1**
(43) Veröffentlichungstag der Anmeldung: **19.01.2000**
(21) Anmeldenummer: 99112350.6
(22) Anmeldetag: 28.06.1999
(51) Int. Cl.: A61C 1/14

(54) **Handstück für ärztliche oder zahnärztliche Zwecke mit einer einstellbaren Anschlagvorrichtung**

(30) Priorität: 14.07.1998 DE 19831568
(71) Anmelder: KALTENBACH & VOIGT GMBH & CO., 88400 Biberach (DE)
(72) Erfinder: Kuhn, Bernhard, 88433 Schemmerhofen (DE)
(74) Vertreter: Schmidt-Evers, Jürgen, Dipl.-Ing.

(57) **Zusammenfassung**

Die Erfindung bezieht sich auf ein Handstück (1) für medizinische oder dentalmedizinische Zwecke, mit einer Verbindungsvorrichtung (3) für ein Werkzeug (4), die im vorderen Endbereich des Handstücks (1) angeordnet ist, und mit einer einstellbaren Anschlagvorrichtung (6) zur Begrenzung der Eindringtiefe des Werkzeugs (4), die ein Anschlagteil (7) aufweist, das in einer Führung (8) längs der Eindringtiefe des Werkzeugs (4) verstellbar und in der jeweiligen Verstellposition durch eine Klemmkraft (11) gesichert ist. Zwecks handhabungsfreundlicher Einstellung des Anschlagteils (7) ist die Klemmkraft (11) elastisch und zum einen so groß, daß sie das Anschlagteil (7) gegen im Funktionsbetrieb wirksame Verstellkräfte sichert und andererseits nur so groß ist, daß das Anschlagteil (7) manuell verschiebbar ist, wobei das Anschlagteil (7) aus hartem, biegeeleastischem Material besteht und so weit verbogen in der Führung (8) sitzt, daß seine Rückbiegekraft (11a) die Klemmkraft (11) erzeugt.

## Beschreibung

Die Erfindung bezieht sich auf ein Handstück nach dem Oberbegriff des Anspruchs 1.

Ein solches Handstück ist bereits vorgeschlagen worden. Es läßt sich für verschiedene Behandlungs- oder Bearbeitungsmaßnahmen am menschlichen oder tierischen Körper einsetzen In solchen Fällen in denen es auf eine bestimmte Eindringtiefe des Werkzeugs des Handstücks ankommt, ist bereits eine Anschlagvorrichtung am Handstück mit einem Anschlagteil vorgeschlagen worden, dessen axialer Abstand zur Werkzeugspitze so einstellbar ist, das unterschiedliche Eindringtiefen für das Werkzeug einstellbar sind. Zur Feststellung des Anschlagteils der Anschlagvorrichtung in der jeweils eingestellten Position kann eine formschlüssig oder kraftschlüssig wirksame Feststellvorrichtung, z.B. ein Schraubentrieb oder eine Klemmschraube, dienen, mit dem das Anschlagteil manuell verstellbar und in der eingestellten Position formschlüssig gesichert ist bzw. mit der das Anschlagteil festklemmbar ist. In beiden Fällen muß ein besonderes Bauteil bewegt werden.

Bei diesen bekannten Ausgestaltungen bedarf es somit eines beträchtlichen manuellen Aufwandes um an der Anschlagvorrichtung die Eindringtiefe einzustellen. Zwar gewährleistet ein Schraubentrieb aufgrund eines integrierten Untersetzungstriebes eine leichte Verstellung, jedoch sind insbesondere größere Verstellmaßnahmen, wie sie insbesondere beim Aufbereiten von Zahn- Wurzelkanälen auftreten, nur mit einem verhältnismäßig großen Zeitaufwand einzustellen, wobei zur Einstellung der Schraubentrieb fortwährend zu betätigen ist. Im anderen Fall ist auch das Lösen und Festziehen der Klemmschraube handhabungs- und zeitaufwendig.

Der Erfindung liegt die Aufgabe zugrunde, ein Handstück der im Oberbegriff des Anspruchs 1 angegebenen Art so auszugestalten, daß eine handhabungsfreundliche und schnelle Einstellung des Anschlagteils längs der Eindringtiefe möglich ist.

Diese Aufgabe wird durch die Merkmale des Anspruchs 1 gelöst.

Beim erfindungsgemäßen Handstück bedarf es keines Lösens und Festziehens der Einstellvorrichtung an der Anschlagvorrichtung, sondern für eine Einstellung kann das Anschlagteil direkt manuell ergriffen und verstellt werden, wobei lediglich ein gewisser Kraftaufwand aufzubringen ist, um das Anschlagteil zu verstellen. Die Feststellung des Anschlagteils in der jeweils eingestellten Position erfolgt selbsttätig durch die elastische Klemmkraft, die so groß bemessen ist, daß die Anschlagvorrichtung die im Funktionsbetrieb des Handstücks auftretenden Anschlagkräfte aufzunehmen vermag, ohne verstellt zu werden, und andererseits nur so groß ist, daß das Anschlagteil durch die manuelle Schub- oder Zugkraft verstellt werden kann, wobei die elastische Klemmkraft überdrückt wird. Die erfindungsgemäße Ausgestaltung zeichnet sich auch durch eine einfache und Meine Bauweise aus. Ersteres ist dadurch begründet, daß es keines zusätzlichen und beweglichen Klemmteils bedarf, so daß die Anschlagvorrichtung in einfacher und Meiner Bauweise ausgeführt werden kann, was angesichts der beengten Raumverhältnisse an möglichen Behandlungsstellen des menschlichen oder tierischen Körpers und insbesondere bei einem dentalmedizinischen Handstück von wesentlicher Bedeutung ist.

Außerdem bedarf es bei der erfindungsgemäßen Ausgestaltung keiner Betätigung eines Einstellgetriebes, wie es bei einem Schraubentrieb der Fall ist, sondern das Anschlagteil wird direkt in seine Verstellbewegung verschoben, und große Antriebswege und Zwischengetriebe, die auch zu einer größeren Bauweise führen, entfallen.

Im Funktionsbetrieb sind die jeweiligen Anschlagpunkte von Behandlungsstelle zu Behandlungsstelle unterschiedlich, und es bedarf deshalb einer Einstellung der Position des Anschlagteils bezüglich der jeweiligen Anschlagstelle. Auch hierzu ist es bereits vorgeschlagen worden, das Anschlagteil quer verstellbar und in der jeweiligen Verstellposition mittels einer Klemmschraube feststellbar anzuordnen.

Außerdem ist die Anordnung einer Anschlagvorrichtung, insbesondere am vorderen Ende eines Handstücks, bezüglich der sich ergebenden Baugröße in zweierlei Hinsicht problematisch. Zum einen führt der Anbau einer Anschlagvorrichtung zu einer Vergrößerung des Handstücks, und zum anderen wird die Sicht auf die Behandlungsstelle behindert, und zwar sowohl dann, wenn die Blickrichtung unter Berücksichtigung eines Meinen Neigungswinkels längs der Werkzeugachse gerichtet ist als auch quer dazu. Im ersteren Falle ist grundsätzlich jede Verbreiterung des Handstückkopfes unerwünscht. Im zweiten Falle stört hauptsächlich das Anschlagteil selbst, das sich bis zur Behandlungsstelle erstreckt und dort durch Anschlag die Einarbeitungstiefe begrenzt.

Der Erfindung liegt deshalb im weiteren die Aufgabe zugrunde, ein Handstück der im Oberbegriff des Anspruchs 6 angegebenen Art so auszugestalten, daß eine handhabungsfreundliche und schnelle Einstellung des Anschlagteils, quer zur Eindringtiefe möglich ist.

Diese Aufgabe wird durch die Merkmale des Anspruches 6 gelöst.

Durch diese Ausgestaltung werden die gleichen Vorteile erzielt, wie sie bereits mit der Ausgestaltung nach Anspruch 1 angegeben wurden, mit dem Unterschied, daß es sich hier um quer gerichtete Kräfte und Bewegungen handelt.

Es können im Funktionsbetrieb eine von mehreren Anschlagstellen am Gewebe ausgesucht werden, die sich für einen Anschlag besonders gut eignet, oder wo ein Anschlag überhaupt erst möglich ist. Bezüglich dieser Problemstellung ist das erfindungsgemäße Handstück somit anpassungsfähig, und es kann die beste Anschlagposition in einem bestimmten Bewegungsbereich ausgesucht werden.

Zum anderen kann die Anschlagvorrichtung bei der Ausgestaltung nach Anspruch 6 zwischen einer Nichtgebrauchsstellung, in der die Anschlagvorrichtung sich sozusagen in einer nicht benötigten Parkstellung befindet, und wo sie auch die Sicht auf die Behandlungsstelle nicht behindert, in eine Gebrauchsstellung bewegt werden, in der sich eine gute Anschlagstelle befindet oder ein Anschlag überhaupt erst möglich ist. Diese erfindungsgemäße Ausgestaltung ist auch im Hinblick auf eine Rechts-Linksverwendbarkeit des Handstücks von Vorteil, und zwar insbesondere dann, wenn die Anschlagvorrichtung von der einen Seite des Handstücks auf die andere Seite des Handstücks bewegt werden kann und somit für eine Rechts- und Linksfunktion einstellbar ist. Diese Grundeinstellungen sind unabhängig von der Einstellung des Anschlagteils in Richtung der Eindrungtiefe.

Der Erfindung liegt im weiteren die Aufgabe zugrunde, ein Handstück der im Oberbegriff des Anspruchs 8 angegebenen Art so auszugestalten, daß es für Arbeiten mit und ohne Eindringtiefenbegrenzung einsetzbar ist.

Diese Aufgabe wird durch die Merkmale des Anspruchs 8 gelöst.

Bei dieser Ausgestaltung ist die Anschlagvorrichtung durch eine Verrastungsvorrichtung oder eine Steck/Klemmvorrichtung mit dem Handstück verbunden und somit handhabungsfreundlich und schnell montierbar und lösbar. Hierdurch kann die Anschlagvorrichtung dann, wenn sie gebraucht wird, schnell an das Handstück anmontiert werden und dann, wenn sie nicht gebraucht wird, schnell abmontiert werden. Für diese Maßnahmen eignet sich eine Verrastungsvorrichtung oder Steck/Klemmvorrichtung vorzüglich, da sie eine schnelle und auch handhabungsfreundliche Montage bzw. Demontage ermöglichen und auch eine Meine Bauweise gewährleisten.

Insbesondere unter Berücksichtigung der vorbeschriebenen beengten Raumverhältnisse und Sichtfreiheit auf die Behandlungsstelle ist sowohl die Position der Anschlagvorrichtung bezüglich des Handstücks als auch die Befestigungsstelle der Anschlagsvorrichtung am Handstück von Bedeutung. Eine vorteilhafte Befestigungsstelle befindet sich direkt vor der Stirnfläche eines Handstücks oder eines Handstückkopfes (Winkelstück) und zwar im das Werkzeug nahe umgebenden Bereich. Dieser Bereich ist vorzugsweise durch einen Ansatz, insbesondere einen Ringansatz an der betreffenden Stirnseite gebildet, auf den die Anschlagvorrichtung befestigbar ist, vorzugsweise durch die Verrastungsvorrichtung oder die Steck/Klemmvorrichtung. Diese vorbeschriebene Stelle stört die Sicht auf die Behandlungsstelle nicht, weil die Blickrichtung seitlich neben dem Handstück bzw. Handstückkopf gerichtet ist und deshalb auch neben dieser Behandlungsstelle verläuft. Wenn dann das Anschlagteil auch noch nahe am Werkzeug angeordnet ist, kann nicht nur die Befestigungsstelle sondern auch das Anschlagteil sich innerhalb des sich längs des Werkzeugs ergebenden Projektionsbereichs das Handstück befinden, so daß nicht nur die Befestigungsstelle sondern auch das Anschlagteil die Sicht nicht oder kaum behindert. Deshalb ist diese Befestigungsstelle und zugehörige Ausgestaltungsmerkmale von selbständiger erfinderischer Bedeutung.

Außerdem bezieht sich die Erfindung auch auf die erfindungsgemäße Anschlagvorrichtung selbst.

In den Unteransprüchen sind Merkmale enthalten, die im weiteren zu kleinen, handhabungsfreundlich bedienbaren und kostengünstig herstellbaren Ausgestaltungen führen und sich durch eine gute Funktion und lange Lebensdauer auszeichnen.

Bei der Anschlagvorrichtung handelt es sich um ein Bauteil, das wahlweise an das Handstück montierbar ist. Die Erfindung bezieht sich deshalb auch auf die Anschlagvorrichtung als Einzelteil.

Nachfolgend werden die Erfindung und weitere durch sie erzielbare Vorteile anhand von vorteilhaften Ausführungsbeispielen beschrieben. Es zeigen
- Fig. 1: den vorderen Endbereich eines erfindungsgemäßen zahnärztlichen Handstücks mit einer Anschlagvorrichtung;
- Fig. 2: die Anschlagvorrichtung in der Unteransicht;
- Fig. 3: den vorderen Endbereich eines erfindungsgemäßen zahnärztlichen Handstücks mit einer Anschlagvorrichtung in abgewandelter Ausgestaltung;
- Fig. 4: die Anschlagvorrichtung nach Fig. 3 in der Unteransicht.

Das mit 1 bezeichnete Handstück weist eine Griffhülse 2 auf, die sich gerade oder abgewinkelt erstrecken kann, wie es bei zahnärztlichen Handstücken üblich ist, und an ihrem vorderen Ende integriert eine Verbindungsvorrichtung 3, z.B. eine Spann- oder Haltevorrichtung, für ein Werkzeug 4 aufweist, bei dem es sich z.B. um ein spanabhebendes Werkzeug 4 handeln kann. Bei der vorliegenden Ausgestaltung erstreckt sich das längliche Werkzeug 4 quer zur Längsmittelachse 5 des Handstücks. Ein solches Handstück 1 wird in der Fachsprache mit Winkelkopf bezeichnet. Im Rahmen der Erfindung kann sich das Werkzeug jedoch auch längs der Mittelachse 5 des Handstücks nach vorne erstrecken.

Im Handstück 1 ist eine Antriebsvorrichtung für das Werkzeug 4 angeordnet. Hierbei kann es sich um einen Antriebswellenzug (nicht dargestellt) handeln, der beim Ankuppeln des hinteren Endes der Griffhülse 2 an ein sogenanntes Anschlußteil mit einem im Anschlußteil angeordneten Motor direkt oder mittelbar verbunden wird. Beim dem Handstück 1 kann es sich auch um eine sogenannte Turbine handeln mit einem Turbinenantrieb im vorderen Endbereich des Handstücks 1 der mit Druckluft aus einer Zuführungsleitung gespeist wird, die beim vorbeschriebenen Ankuppeln der Griffhülse an das Anschlußteil mit einem zugehörigen Zuführungsleitungsabschnitt gekuppelt wird. Beim vorliegenden Ausführungsbeispiel ist das Werkzeug 4 ein dünnes und verhältnismäßig langes biegsames Wurzelkanalwerkzeug, das zur Aufbereitung des Wurzelkanals eines Zahns dient. Am Handstück 1 ist eine Anschlagvorrichtung 6 mit einem stiftförmigen Anschlagteil 7 lösbar befestigt, dessen vorderer Endbereich in der Nähe des Werkzeugs 4 und von dessen vorderem Ende rückversetzt angeordnet ist und einen Anschlag 7a bildet.

Die Hauptteile der Anschlagvorrichtung 7 sind das Anschlagteil 7 in Form eines Stiftes mit vorzugsweise rundem Querschnitt, eine Führung 8, in der das Anschlagteil 7 angeordnet und längs verschiebbar ist, eine elastisch wirksame Klemmvorrichtung 9, die eine quer gerichtete Klemmkraft auf das Anschlagteil 7 ausübt, die wenigstens so groß ist, daß die im Funktionsbetrieb gegen das Anschlagteil 7 wirksamen Anschlagkräfte aufgenommen werden können, ohne daß das Anschlagteil 7 in der Führung 8 verschoben wird, und zum anderen nur so groß bemessen ist, daß das Anschlagteil manuell ergriffen und in der Führung 8 durch Ausübung einer gewissen Schub- oder Zugkraft verschoben werden kann. Dabei wird die mit dem Pfeil 11 verdeutlichte quer gerichtete elastische Klemmkraft überdrückt. Um das manuelle Ergreifen des Anschlagteils 7 zu erleichtern, weist dieses in einem Endbereich eine Taillierung oder Verdickung auf, z.B. einen verdickten Kopf 12, vorzugsweise am der Werkzeugspitze abgewandten Ende des Anschlagteils 7. Es besteht aus einem verhältnismäßig harten Material, das aufgrund seiner länglichen bzw. stiftförmigen Form quer elastisch biegsam ist und vorzugsweise Kunststoff ist.

Die Führung 8 ist durch ein abgewinkeltes Rohr 13 gebildet, an dessen Innenquerschnittsgröße das Anschlagteil 7 mit einem geringen Bewegungsspiel angepaßt ist, so daß es in einem sich gerade erstreckenden Abschnitt des Rohrs 13 darin manuell leicht verschiebbar ist. Aufgrund der Abwinklung des Rohrs, z.B. um einen Winkel W von etwa 30°, wird dem geraden Anschlagteil 7 die Abwinklungsform aufgezwungen, d.h. das Anschlagteil 7 wird beim Einschieben in das Rohr 13 in die abgewinkelte Form gebogen. Hierdurch wird in dem Anschlagteil 7 aufgrund seiner Elastizität eine Rückbiegekraft 11a hervorgerufen, die permanent gegen die Rohrwandung drückt und dabei aufgrund der vorhandenen Flächenreibung die elastische Klemmkraft 11 erzeugt, wobei der abgebogene Schenkel des Anschlagteils 7 selbst als quer bewegliches Klemmteil 9a fungiert. Die Größe der Klemmkraft 11 ist vom Winkel W abhängig und kann durch einen größeren oder kleineren Winkel W vorbestimmt werden. Die Abwinkelung des Rohrs 13 ist im Scheitelbereich vorzugsweise nicht kantig sondern gerundet bzw. gekrümmt.

Die Anschlagvorrichtung 6 ist durch eine lösbare Schnellschlußverbindung mit dem Handstück 1 verbunden, die vorzugsweise durch eine Steck/Klemmvorrichtung ST oder eine Verrastungsvorrichtung V gebildet ist. Hierzu sind an der Anschlagvorrichtung 6 ein Vorrichtungsteil 14a und am Handstück 1 ein Vorrichtungsteil 14b angeordnet, die elastisch miteinander verrastbar sind, wobei beim Verrasten und beim Entrasten jeweils eines der beiden Verrastungsteile 14a, 14b als Klemmteil 10 elastisch ausbiegbar und dabei mit einem gewissen Kraftaufwand überdrückbar sein kann.

Bei der vorliegenden Ausgestaltung ist der Vorrichtungsteil 14a bzw. das Klemmteil 10 durch eine C-förmige Spange 15 mit zwei klauenförmig angeordneten Spangenarmen 15a, 15b aus elastisch biegsamem Material gebildet, die quer auf einen z.B. zylindrischen Haltezapfen 16 am Handstück 1 aufschiebbar sind, wobei beim Aufschieben die Spangenarme 15a, 15b zunächst gespreizt werden und dann den Haltezapfen 16 hintergreifen und gegen den Haltezapfen 16 drücken. Hierdurch wird eine radial einwärts gerichtete Klemmkraft 17 erzeugt, die aufgrund der Reibung ein Drehen der Anschlagvorrichtung 6 um den Haltezapfen 16 hemmt. Nur mit einer etwas vergrößerten manuellen Drehkraft kann die Spange 15 auf dem Haltezapfen 16 stufenlos in Umfangsrichtung verstellt werden, wobei sie in jeder Verstellposition aufgrund ihrer Klemmkraft 17 die jeweilige eingestellte Drehstellung sichert. Beim quer gerichteten Aufschieben auf den Haltezapfen 16 bilden die Stirnflächen der Haltearme 15a, 15b schräge Einführungsflächen 15c. Diese Spange 15 weist eine axiale Länge auf, die etwa dem Durchmesser des Haltezapfens 16 entspricht und ist somit im wesentlichen buchsenförmig, wodurch eine stabile Halterung erreicht wird.

Die axiale Position der Anschlagvorrichtung 6 ist durch ihre Anlage an einer Schulterfläche 16a des Haltezapfens 16 bestimmt, die hier an dem der Werkzeugspitze abgewandten Ende des Haltezapfens 16 angeordnet ist und kegelförmig sein kann.

Die Funktion der Steck/Klemmvorrichtung ST im Sinne einer Steckfassung wird insbesondere dann deutlich, wenn die Gabel 15 axial auf den Haltezapfen 16 aufgesteckt wird, wobei eine entsprechend hohlkegelförmige Stirnfläche der Spange 1 oder eine Abschrägung oder Rundung 15d des inneren Lochrandes eine das axiale Aufschieben erleichternde Einführungsfläche bilden.

Die radial einwärts gerichtete Klemmkraft 17 der Verrastungs- bzw. Klemmvorrichtung V, ST ist so groß bemessen, daß aufgrund der daraus resultierenden Klemmung eine ungewollte Verdrehung der Anschlagvorrichtung 6 beim Gebrauch des Handstücks verhindert ist. Dagegen kann die Anschlagvorrichtung 6 durch manuellen Kraftaufwand verdreht werden, wobei die Klemmung 17 überdrückt wird und in der jeweils stufenlos einstellbaren Drehstellung selbsttätig wieder wirksam ist. Bei der vorliegenden Ausgestaltung sind die Spangenarme 15a, 15b innen kreisbogenförmig gerundet, wobei im entspannten Zustand der Radius etwas kleiner ist, als der Durchmesser des Haltezapfens 16.

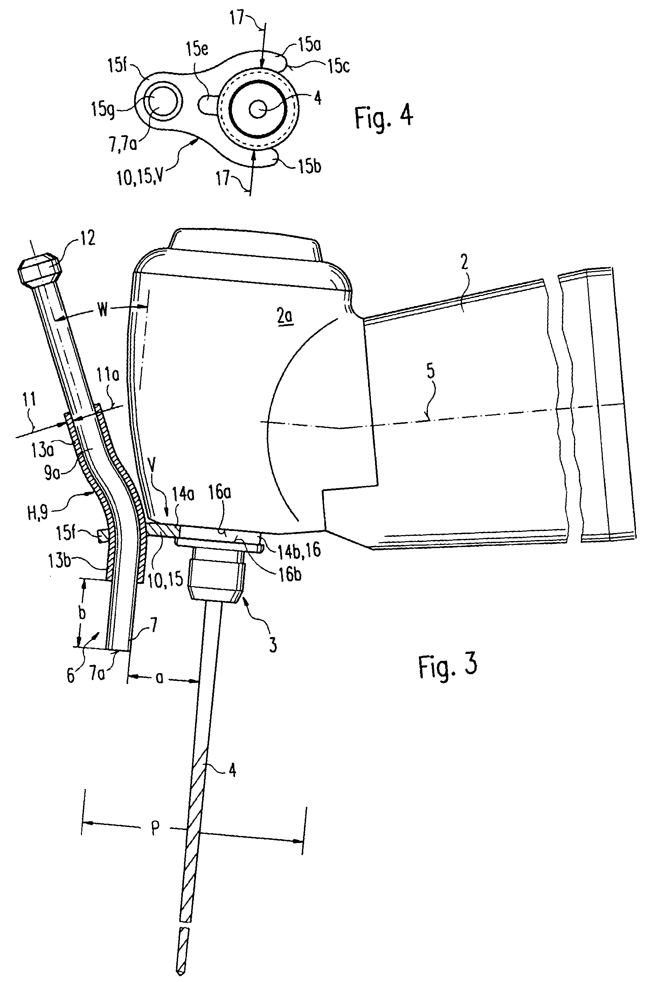

Das Rohr 13 ist zum einen in seinem mittleren Bereich (Rohrschenkel 13a) oder im Bereich seines Abwinklungsscheitels (Fig. 3) und zum anderen im Bereich des Scheitels der Spange 15 an dieser befestigt. Der Abstand a des der Werkzeugspitze zugewandten und sich parallel zum Werkzeug 4 erstreckenden Rohrschenkels 13b beträgt einige Millimeter und kann unter Berücksichtigung besonderer Einsatzfälle vorbestimmt werden. Bei dem vorliegenden Handstück 1 zur Aufbereitung von Wurzelkanälen beträgt der Abstand a etwa 2 bis 4 mm, so daß das Anschlagteil 7 in Funktionsbetrieb mit seinem vorderen Endanschlag 7a gegen den okklusalen Randbereich des jeweiligen Zahns stößt und die Eindringtiefe begrenzt.

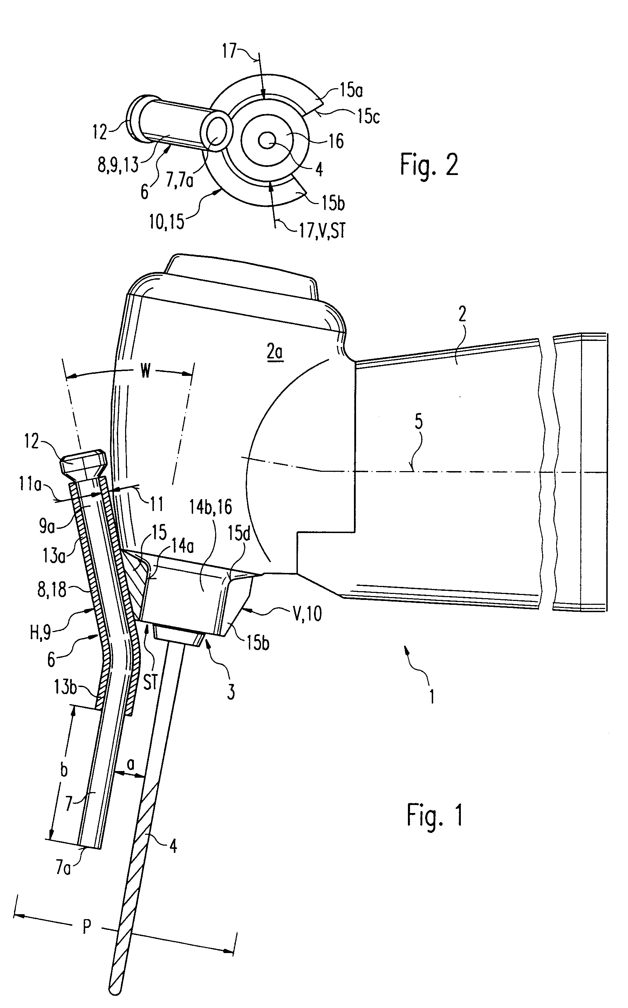

In der in Fig. 1 dargestellten Stellung befindet sich das Anschlagteil 7 in seiner vordersten Stellung. Der in dieser Stellung bis zum vorderen Ende des Führungsrohrs 13 vorhandene Abstand b kann als Einstellbereich dienen. Der Rohrschenkel 13a erstreckt sich neben dem Handstück 2, hier neben dessen Winkelkopf 1a. Zwecks linienförmiger Anlage des Rohrs 16 an der Spange 15 ist die Mantelfläche der Spange 15 wenigstens in ihrem vorderen Bereich entsprechend kegelförmig. Die Befestigung des Rohrs 16 kann z.B. durch Kleben oder Löten oder Schweißen erfolgen.

Das Ausführungsbeispiel nach Fig. 3 und 4 bei dem gleiche oder vergleichbare Teile mit gleichen Bezugszeichen versehen sind, unterscheidet sich vom vorbeschriebenen Ausführungsbeispiel durch folgende Einzelheiten. Die Spange 15 ist im Sinne einer Platte dünner bemessen und kann aus Blech bestehen. Ihre Dicke kann z.B. etwa 1 bis 2 mm betragen. Hierdurch ist es möglich, die Spange 15 als Stanzteil herzustellen, was sehr preiswert ist. Aufgrund der geringen Dicke ist die Breite der Spangenarme 15a, 15b etwas größer zu bemessen, wodurch die Elastizität vermindert wird. Insbesondere bei einer solchen Spange 15 ist es vorteilhaft, im Scheitelbereich der Spange 15 eine Aussparung 15e anzuordnen, die die Elastizität der Spangenarme vergrößern. Wie Fig. 3 im weiteren zeigt, weist die Spange in einem Basissteg 15f ein Loch 15g auf, durch das sich das Rohr 16 erstreckt. Im weiteren kann die Spange 15 in ihrem Basisbereich abgewinkelt sein, so daß das Rohr 16 den hier abgewinkelten Basissteg 15f etwa rechtwinklig durchsetzt.

Ein weiterer Unterschied der Ausgestaltung nach Fig. 3 besteht darin, daß das Führungsrohr 13 zwei einander entgegengesetzte Abwinklungen aufweist, vorzugsweise S-förmig gekrümmt ist. Hierdurch läßt sich die Klemmspannung 11 bzw. die Rückbiegespannung 11a vergrößern. Bei dieser Darstellung befindet sich das Anschlagteil 7 in einer mittleren Stellung des vorhandenen Verstellbereichs.

Ein weiterer Unterschied besteht darin, daß der Haltezapfen 16 nicht nur auf seiner der Werkzeugspitze abgewandten Seite eine Schulterfläche 16a aufweist sondern auch auf seiner der Werkzeugspitze zugewandten Seite eine Schulterfläche 16b mit geringem Einsteckspiel aufweist, wodurch die Spange 15 in einer Nut, vorzugsweise Ringnut, sitzt und in beide axiale Richtungen stabilisiert und gesichert ist.

Der Durchmesser des Haltezapfens 16 ist Meiner bemessen als die Querschnittsabmessung des Handstücks 2, hier die des Winkelkopfes 2a. Folglich sind der Haltezapfen 16, die Spange 15 und der achsparallele Rohrschenkel 13b in der axialen Projektionsfläche P des Handstücks 2 angeordnet, wo sie die spitzwinklich zur Werkzeugachse gerichtete Blickrichtung auf die Behandlungsstelle nicht oder kaum beeinträchtigen.

Wenn der Haltezapfen 16 ein Mehrkant ist, z.B. ein Zweikant, Vierkant, Sechskant, Achtkant oder im Sinne einer Vielzahnwelle ausgebildet ist, lassen sich in Umfangsrichtung definierte Raststellen in bestimmter Drehposition in Stufen einstellen.

Die Einzelteile der eine Haltevorrichtung H für das Anschlagteil 7 bildenden Teile, hier das Führungsrohr 13 und die Spange 15, können ebenfalls aus hartem Kunststoff oder Stahl, insbesondere Federstahl, bestehen.

Die erfindungsgemäßen Ausgestaltungen ermöglichen mehrere, voneinander unabhängige Funktionen. Zusätzlich zur vorbeschriebenen Anschlagfunktion mit dem Anschlag 7a ist die Anschlagvorrichtung 6 schnell und handhabungsfreundlich zwischen einer Gebrauchsstellung und einer Nichtgebrauchsstellung verstellbar. Hierzu bedarf es lediglich eines manuellen Verdrehens der Anschlagvorrichtung 6 um den Haltezapfen 16. Hierdurch wird die Anschlagvorrichtung 6 nicht nur außer Funktion gestellt, sondern es wird auch der Blick auf die Behandlungsstelle verbessert. Durch ein Verschwenken zur einen oder zur anderen Seite des Handstücks 1 hin läßt sich die Anordnung wahlweise auch als Rechts- oder Linksausführung einstellen.

Die Verrastungsvorrichtung V bzw. Steck/Klemmfassung ST ermöglicht es, das Handstück 1 handhabungsfreundlich und schnell mit der Anschlagvorrichtung 6 auszurüsten bzw. die Anschlagvorrichtung 6 zu entfernen. Eine solche Entfernung kann auch als ein Verstellen in die Nichtgebrauchsstellung angesehen werden.

Die erfindungsgemäßen Ausgestaltungen eignen sich sehr vorteilhaft für Behandlungsstellen im beengten Mundraum und insbesondere für Zahn-Wurzelkanalbehandlungen mit langgestreckten Wurzelkanalwerkzeugen. Sie eignen sich unter anderem jedoch auch für solche Handstücke, die in einem medizinischen oder dentalmedizinischen Labor zur Bearbeitung von Modellen oder dergl. benutzt werden.

## Patentansprüche

1. Handstück (1), insbesondere für medizinische oder dentalmedizinische Zwecke, mit einer Verbindungsvorrichtung (3) für ein Werkzeug (4), die im vorderen Endbereich des Handstücks (1) angeordnet ist, und mit einer einstellbaren Anschlagvorrichtung (6) zur Begrenzung der Eindringtiefe des Werkzeugs (4), die ein Anschlagteil (7) aufweist, das in einer Führung (8) längs der Eindringtiefe des Werkzeugs (4) verstellbar und in der jeweiligen Verstellposition durch eine Klemmkraft (11) gesichert ist,
**dadurch gekennzeichnet,**
daß die Klemmkraft (11) elastisch ist und zum einen so groß ist, daß sie das Anschlagteil (7) gegen im Funktionsbetrieb wirksame Verstellkräfte sichert und andererseits nur so groß ist, daß das Anschlagteil (7) manuell verschiebbar ist und daß das Anschlagteil (7) aus hartem, biegeelastischem Material besteht und so weit verbogen in der Führung (8) sitzt, daß seine Rückbiegekraft (11a) die Klemmkraft (11) erzeugt.

2. Handstück nach Anspruch 1,
**dadurch gekennzeichnet,**
daß das Anschlagteil (7) ein stiftförmiges Bauteil ist, vorzugsweise runder Querschnittsform.

3. Handstück nach Anspruch 1 oder 2,
**dadurch gekennzeichnet,**
daß die Führung (8) durch ein Hohlprofil oder Rohr (13) gebildet ist, das sich mit einem vorderen Schenkel (13b) im wesentlichen parallel zur Eindringtiefe und mit einem hinteren Schenkel (13a) abgewinkelt oder gekrümmt erstreckt.

4. Handstück nach einem der vorherigen Ansprüche,
**dadurch gekennzeichnet,**
daß das Anschlagteil (7) quer zur Eindringtiefe verstellbar und in der jeweiligen Versteilposition durch ein Klemmteil (10) gegen eine unbeabsichtigte Verstellung gesichert ist.

5. Handstück nach Anspruch 4,
**dadurch gekennzeichnet,**
daß das Klemmteil (10) unter einer elastischen Klemmspannung steht, die zum einen so groß ist, daß sie das Anschlagteil (7) gegen im Funktionsbetrieb wirksame Verstellkräfte sichert und andererseits nur so groß ist, daß das Anschlagteil (7) manuell quer verstellbar ist.

6. Handstück (1) für medizinische oder dentalmedizinische Zwecke, mit einer Verbindungsvorrichtung (3) für ein Werkzeug (4), die im vorderen Endbereich des Handstücks (1) angeordnet ist, und mit einer Anschlagvorrichtung (6) zur Begrenzung der Eindringtiefe des Werkzeugs (4), die ein Anschlagteil (7) aufweist, das quer zur Eindringtiefe verstellbar und in der jeweiligen Verstellposition durch ein Klemmteil (10) gegen eine unbeabsichtigte Verstellung gesichert ist,
**dadurch gekennzeichnet,**
daß das Klemmteil (10) unter einer elastischen Klemmspannung steht, die zum einen so groß ist, daß sie das Anschlagteil (7) gegen im Funktionsbetrieb wirksame Verstellkräfte sichert und andererseits nur so groß ist, daß das Anschlagteil (7) manuell verstellbar ist, und daß daß das Klemmteil (10) der Anschlagvorrichtung (6) eine C-förmige Spange (15) ist, die auf einem Haltezapfen (16) angeordnet ist, dessen Querschnittsform kreisrund oder ein Mehrkant ist.

7. Handstück nach Anspruch 7,
**dadurch gekennzeichnet,**
daß die Anschlagvorrichtung (6) um das Werkzeug (4) drehbar ist, insbesondere um dessen Mittelachse.

8. Handstück (1) für medizinische oder dentalmedizinische Zwecke, mit einer Verbindungsvorrichtung (3) für ein Werkzeug (4), die im vorderen Endbereich des Handstücks (1) angeordnet ist, und mit einer Anschlagvorrichtung (6) zur Begrenzung der Eindringtiefe des Werkzeugs (4), die ein Anschlagteil (7) aufweist, das vorzugsweise längs der und/oder quer zur Eindringtiefe des Werkzeugs (4) verstellbar und in der jeweiligen Verstellposition durch eine Klemmkraft (11 bzw. 17) gesichert ist,
**dadurch gekennzeichnet,**
daß die Anschlagvorrichtung (6) durch eine Verrastungsvorrichtung (V) oder Steck/Klemmvorrichtung (ST) mit dem Handstück (1) verbindbar und wieder lösbar ist.

9. Handstück nach Anspruch 8,
**dadurch gekennzeichnet,**
daß die Verrastungsvorrichtung (V) oder Steck/Klemmvorrichtung (ST) jeweils durch einen Haltezapfen (16) und eine darauf quer oder axial aufschiebbare Spange (15) gebildet ist.

10. Handstück, insbesondere nach einem der Ansprüche 6 bis 9,
**dadurch gekennzeichnet,**
daß der Haltezapfen (16) durch einen das Werkzeug (4) oder dessen Verbindungsvorrichtung (3) umgebenden koaxialen hülsenförmigen Vorsprung gebildet ist.

11. Handstück nach Anspruch 9 oder 10,
**dadurch gekennzeichnet,**
daß die Außenquerschnittsform des Haltezapfens (16) kreisrund oder ein Mehrkant ist.

12. Handstück nach einem der vorherigen Ansprüche 9 bis 11,
**dadurch gekennzeichnet,**
daß die Spange (15) mit einer der Querschnittsabmessung des Haltezapfens (16) etwa entsprechenden axialen Länge buchsenförmig ausgebildet ist.

13. Handstück nach einem der Ansprüche 9 bis 12,
**dadurch gekennzeichnet,**
daß die Spange (15) durch eine dünne Plane gebildet ist, die quer in eine Ringnut im Haltezapfen (16) einschiebbar ist.
